# EUROPEAN PATENT APPLICATION

(11) **EP 4 838 617 A1**
(43) Date of publication of application: **11.11.2026**
(21) Application number: 26171477.8
(22) Date of filing: 09.04.2026
(51) Int. Cl.: H01M 10/0587, H01M 4/04, H01M 4/70, H01M 10/04, H01M 4/02

(54) **ELECTRODE, WOUND ELECTRODE ASSEMBLY, AND SECONDARY BATTERY**

(30) Priority: 08.05.2025 JP 2025078137
(71) Applicant: Toyota Jidosha Kabushiki Kaisha, Toyota-shi, Aichi-ken 471-8571 (JP)
(72) Inventor: KAZAMA, Daichi, Toyota-shi, 471-8571 (JP); KINTSU, Yusuke, Toyota-shi, 471-8571 (JP); SATO, Tomohiro, Toyota-shi, 471-8571 (JP); MIKI, Nariaki, Toyota-shi, 471-8571 (JP); HE, Yu, Toyota-shi, 471-8571 (JP); UEDA, Masashi, Toyota-shi, 471-8571 (JP); KIDA, Tomohisa, Toyota-shi, 471-8571 (JP); IKEDA, Takenori, Toyota-shi, 471-8571 (JP)
(74) Representative: Kuhnen & Wacker Patent- und Rechtsanwaltsbüro PartG mbB

(57) **Abstract**

An electrode (10) includes: a current collector (11) having a first primary surface (11a) located on one side of a thickness direction of the electrode (10) and a second primary surface (11b) located on the other side of the thickness direction, the current collector (11) being elongated and extending along a length direction of the electrode (10) orthogonal to the thickness direction; a first electrode film (13) disposed on the first primary surface (11a); and a second electrode film (14) disposed on the second primary surface (11b), wherein the first electrode film (13) and the second electrode film (14) each include a plurality of high density regions (R1) and a plurality of low density regions (R2), the plurality of high density regions (R1) and the plurality of low density regions (R2) are disposed alternately along the length direction, a high density region (R1) of the plurality of high density regions (R1) of the first electrode film (13) and a low density region (R2) of the plurality of low density regions (R2) of the second electrode film (14) are arranged in the thickness direction, sandwiching the current collector (11), and a low density region (R2) of the plurality of low density regions (R2) of the first electrode film (13) and a high density region (R1) of the plurality of high density regions (R1) of the second electrode film (14) are arranged in the thickness direction, sandwiching the current collector (11).

## Description

### CROSS REFERENCE TO RELATED APPLICATIONS

This nonprovisional application is based on Japanese Patent Application No. 2025-078137 filed on May 8, 2025 with the Japan Patent Office, the entire content of which is hereby incorporated by reference.

### BACKGROUND

### Field

The present disclosure relates to an electrode, a wound electrode assembly, and a secondary battery.

### Description of the Background Art

Conventionally, WO 2021/132115 discloses an electrode for use in a secondary battery, the electrode including mixture layers disposed on opposing surfaces of a current collector, the mixture layers each including multiple high density regions and multiple low density regions, wherein the high density regions and low density regions, extending along the longitudinal direction of the electrode, are alternately disposed on the opposing surfaces of the current collector in a width direction of the electrode orthogonal to the longitudinal direction.

### SUMMARY

If a high density region and a low density region are present in a mixture layer, the impregnation property of an electrolyte solution is lower in the high density region than in the low density region. In the electrode disclosed in WO 2021/132115, an area in which high density regions overlap in the direction of thickness of the electrode and an area in which low density regions overlap in the direction of thickness of the electrode are aligned alternately in the width direction of the electrode. Due to this, a concern with the electrode disclosed in WO 2021/132115 is that the electrolyte solution is not easily diffused across the surface of the electrode because the region where the electrolyte solution has high impregnation property and the region where the electrolyte solution has low impregnation property are aligned alternately in the width direction.

An electrode may be used in which an electrode film, previously formed into a film, rather than a mixture layer formed by a current collector being coated with slurry, is affixed to a current collector. In this case also, the electrolyte solution is not easily diffused across the surface of the electrode if the area in which high density regions overlap in the direction of thickness of the electrode and the area in which low density regions overlap in the direction of thickness of the electrode are aligned alternately in the width direction of the electrode, as disclosed in WO 2021/132115 above.

The present disclosure is made to solve the above problems, and an object of the present disclosure is to provide an electrode, a wound electrode assembly, and a secondary battery which can promote diffusion of the electrolyte solution.

An electrode according to the present disclosure includes: a current collector having a first primary surface located on one side of a thickness direction of the electrode and a second primary surface located on the other side of the thickness direction, the current collector being elongated and extending along a length direction of the electrode orthogonal to the thickness direction; a first electrode film disposed on the first primary surface; and a second electrode film disposed on the second primary surface. The first electrode film and the second electrode film each include a plurality of high density regions and a plurality of low density regions. The plurality of high density regions and the plurality of low density regions are disposed alternately along the length direction. A high density region of the plurality of high density regions of the first electrode film and a low density region of the plurality of low density regions of the second electrode film are arranged in the thickness direction, sandwiching the current collector. A low density region of the plurality of low density regions of the first electrode film and a high density region of the plurality of high density regions of the second electrode film are arranged in the thickness direction, sandwiching the current collector.

According to the above configuration, on the first primary surface and the second primary surface of the current collector, the high density regions and the low density regions are alternately disposed along the length direction of the current collector, and a high density region and a low density region are disposed facing each other in the thickness direction of the current collector. Due to this, the high density regions and the low density region are alternately disposed on the first primary surface and the second primary surface of the current collector along the length direction. Thus, the low density regions and the high density regions are disposed in a generally uniform manner. As a result, diffusion of the electrolyte solution can be promoted.

A wound electrode assembly according to the present disclosure includes the electrode described above, wherein the electrode is wound along the length direction.

According to the above configuration, the wound electrode assembly using the electrode promoting diffusion of the electrolyte solution can be provided.

A secondary battery according to the present disclosure includes the wound electrode assembly and a housing case accommodating the wound electrode assembly.

According to the above configuration, the secondary battery including the wound electrode assembly that is configured using the electrode promoting diffusion of the electrolyte solution can be provided.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a schematic cross sectional view of a secondary battery according to Embodiment 1.
Fig. 2 is a schematic plan view of an expanded positive electrode according to Embodiment 1.
Fig. 3 is a schematic cross sectional view of the positive electrode according to Embodiment 1.
Fig. 4 is a schematic view of a process of fabrication of the positive electrode according to Embodiment 1.
Fig. 5 is a schematic view illustrating a process of forming a positive electrode mixture sheet using the positive electrode according to Embodiment 1.
Fig. 6 is a schematic cross sectional view of a positive electrode according to Embodiment 2.

### DESCRIPTION OF THE PREFERRED EMBODIMENTS

Hereinafter, an embodiment according to the present disclosure will be described, with reference to the accompanying drawings. Note that the embodiment below uses the same reference signs to refer to the same or common parts, and description thereof will not be repeated.

### (Embodiment 1)

### (Secondary Battery)

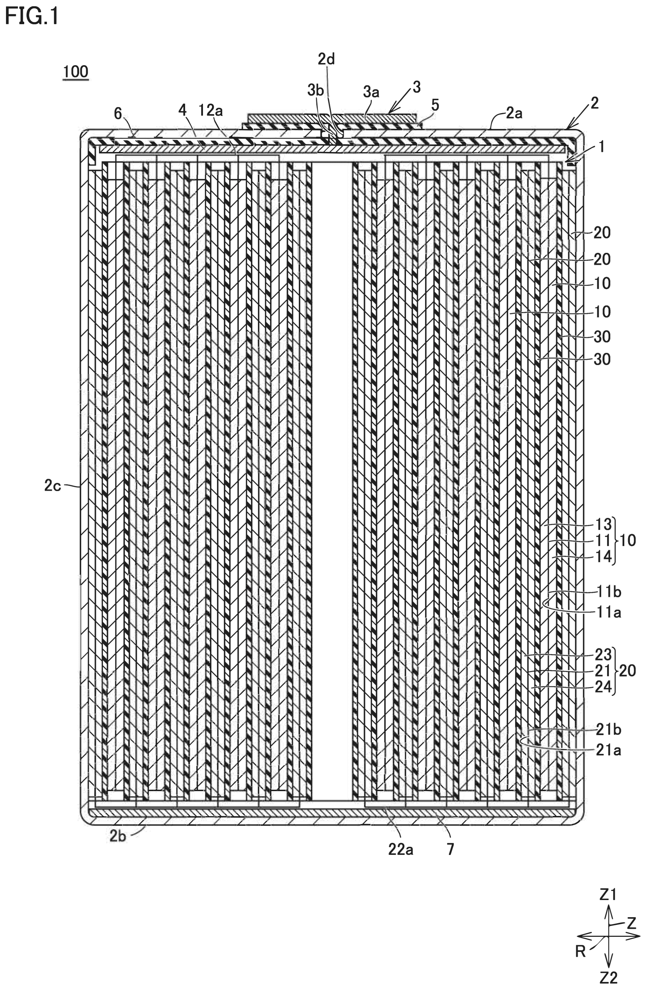

Fig. 1 is a schematic cross sectional view of a secondary battery according to Embodiment 1. Referring to Fig. 1, a secondary battery 100 according to the embodiment is now described.

Secondary battery 100 is, for example, a lithium-ion battery that is mounted on a vehicle. Note that the application and type of secondary battery 100 is not limited to the above example.

Secondary battery 100 according to one embodiment of the present disclosure includes a wound electrode assembly 1, a case 2, a positive terminal 3, a positive current collector plate 4, an external gasket 5, an internal gasket 6, and a negative current collector plate 7.

Wound electrode assembly 1 is spirally wound. Wound electrode assembly 1 is accommodated in case 2. Case 2 has a cylindrical shape. In other others, secondary battery 100 is a cylindrical battery.

Wound electrode assembly 1 includes a positive electrode 10, a negative electrode 20, and a separator 30. Separator 30 is disposed between positive electrode 10 and negative electrode 20 in a radial direction R of wound electrode assembly 1. Separator 30 separates positive electrode 10 and negative electrode 20 from each other. Meanwhile, separator 30 is configured to allow ions (e.g., lithium-ions) to traverse between positive electrode 10 (more specifically, a positive active material) and negative electrode 20 (more specifically, a negative active material).

Wound electrode assembly 1 is configured of a group of electrode plates, in which the positive electrode 10 and negative electrode 20 are wound together via separator 30. Note that the positive electrode 10 and negative electrode 20 according to the present embodiment are those used in wound electrode assembly 1 and have different polarities. One of positive electrode 10 and negative electrode 20 corresponds to a first electrode , and the other one of positive electrode 10 and the negative electrode corresponds to a second electrode .

Case 2 has an upper surface 2a, a lower surface 2b, and a circumferential surface 2c. Upper surface 2a is located on one side of the axial direction of the cylindrical shape of case 2. Upper surface 2a is located on one side Z1 of an axial direction Z of wound electrode assembly 1, as viewed from wound electrode assembly 1. Lower surface 2b is located on the other side Z2 of the axial direction of the cylindrical shape of case 2. Lower surface 2b is located on the other side of axial direction Z of wound electrode assembly 1, as viewed from wound electrode assembly 1. Circumferential surface 2c has a tubular outline. Circumferential surface 2c connects upper surface 2a and lower surface 2b. Case 2 is formed of copper or aluminum, for example. Note that the case 2 accommodates an electrolyte solution (not shown) too.

Case 2 has a height dimension (the dimension in axial direction Z) of, for example, 50 mm or greater, 60 mm or greater, 70 mm or greater, or 80 mm or greater. The greater the height dimension (the dimension in axial direction Z) of case 2, the greater the storage battery capacity of secondary battery 100. The height dimension (the dimension in axial direction Z) of case 2 is, for example, 150 mm or less, 100 mm or less, or 80 mm or less. The less the dimension in axial direction Z (the height dimension) of case 2, the lower the profile of a module accommodating the secondary batteries 100 can be.

Case 2 has a diameter dimension (the dimension in radial direction R) of for example, 15 mm or greater, 20 mm or greater, 25 mm or greater, 30 mm or greater, 40 mm or greater, 45 mm or greater, or 46 mm or greater. The greater the diameter dimension (the maximum dimension in radial direction R) of case 2, the greater the storage battery capacity of secondary battery 100. Case 2 has a diameter dimension (the dimension in radial direction R) of, for example, 100 mm or less, 75 mm or less, 50 mm or less, or 46 mm or less. The less the diameter dimension (the dimension in radial direction R) of case 2 has, the more densely the secondary batteries 100 can be disposed in the module.

Positive terminal 3 is located on one side Z1 of axial direction Z, relative to wound electrode assembly 1. Positive terminal 3 includes a disk portion 3a and a riveting portion 3b. Riveting portion 3b is connected to disk portion 3a. Riveting portion 3b extends from the center of disk portion 3a to the other side Z2 of axial direction Z. Note that the positive terminal 3 is formed of aluminum. Disk portion 3a is disposed on upper surface 2a of case 2. Upper surface 2a of case 2 has a through-hole 2d. Riveting portion 3b extends from disk portion 3a, external to case 2, into case 2 through through-hole 2d.

Positive current collector plate 4 is accommodated in case 2. Positive current collector plate 4 is located on one side Z1 of axial direction Z, relative to wound electrode assembly 1. Positive current collector plate 4 is welded to a mixture non-forming portion 12a of positive electrode 10. This positively charges positive current collector plate 4. Positive current collector plate 4 is welded to the end of riveting portion 3b on the other side Z2 of axial direction Z. This positively charges positive terminal 3.

External gasket 5 is disposed between disk portion 3a of positive terminal 3 and upper surface 2a of case 2. This electrically insulates positive terminal 3 and case 2 from each other.

Internal gasket 6 is disposed between case 2 and positive current collector plate 4 in case 2. This electrically insulates case 2 and positive current collector plate 4 from each other. Note that the riveting portion 3b passes through internal gasket 6 and in contact with positive current collector plate 4.

Negative current collector plate 7 is accommodated in case 2. Negative current collector plate 7 is located on the other side Z2 of axial direction Z, relative to wound electrode assembly 1. Negative current collector plate 7 is welded to a mixture non-forming portion 22a of negative electrode 20. This negatively charges negative current collector plate 7. Negative current collector plate 7 is in contact with case 2. Specifically, negative current collector plate 7 is in contact with lower surface 2b and circumferential surface 2c. This negatively charges case 2. Specifically, upper surface 2a is negatively charged.

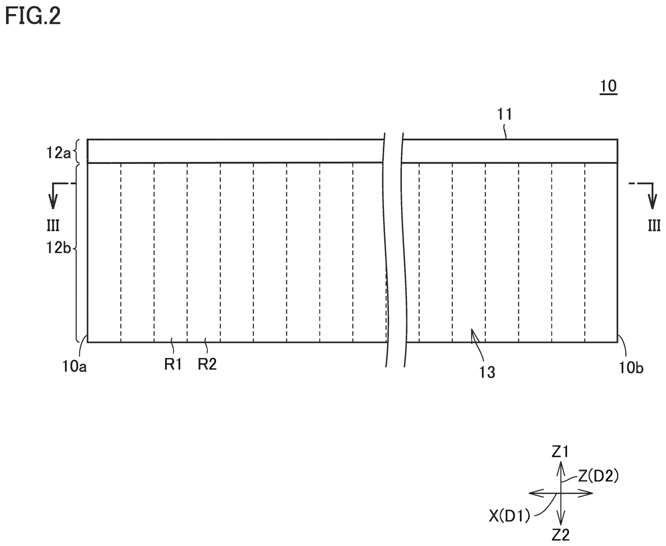

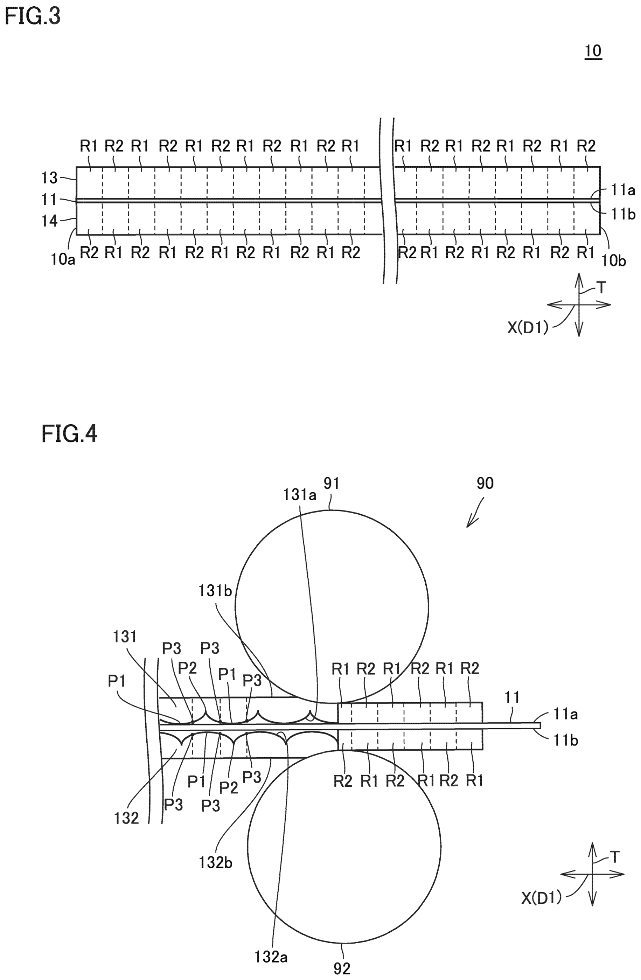

Fig. 2 is a schematic plan view of an expanded positive electrode included in the wound electrode assembly according to the embodiment. Fig. 3 is a schematic cross sectional view of a positive electrode included in the wound electrode assembly according to the embodiment. Note that Fig. 3 is a cross-sectional view taken along a **III-III** line shown in Fig. 2. Referring to Figs. 2 and 3, positive electrode 10 according to the embodiment is now described.

Positive electrode 10, when expanded, has a belt-like shape extending along a longitudinal direction D1 (lengthwise). Longitudinal direction D1 is orthogonal to thickness direction T of the positive electrode 10. The longitudinal direction D1 is also a direction in which a winding direction X of wound electrode assembly 1 is linearly expanded. Positive electrode 10 has a first end 10a and a second end 10b in longitudinal direction D1. First end 10a is the end (the inner peripheral end of the winding) located on the inner peripheral side of wound electrode assembly 1. Second end 10b is the end (the outer peripheral end of the winding) located on the outer peripheral side of wound electrode assembly 1.

Positive electrode 10 includes a positive current collector 11, a first cathode film 13, and a second cathode film 14. For example, positive current collector 11 is configured of a metallic foil such as aluminum. Positive current collector 11 has a first primary surface 11a and a second primary surface 11b that are aligned in a direction of thickness of positive current collector 11. First primary surface 11a is located on one end side of positive current collector 11 in thickness direction T. Second primary surface 11b is located on the other end side of positive current collector 11 in thickness direction T. In the state of wound electrode assembly 1, that is, when positive electrode 10 is wound, first primary surface 11a faces the inner peripheral side of wound electrode assembly 1, and second primary surface 11b faces the outer peripheral side of wound electrode assembly 1.

Positive electrode 10 has a mixture non-forming portion 12a and a mixture forming portion 12b. In mixture non-forming portion 12a, positive current collector 11 is exposed from both first cathode film 13 and second cathode film 14. Both first cathode film 13 and second cathode film 14 are formed in mixture forming portion 12b of positive electrode 10. Mixture non-forming portion 12a extends from mixture forming portion 12b to one side of width direction D2. Mixture non-forming portion 12a, being wound, is exposed from mixture forming portion 12b to one side Z1 of axial direction Z of wound electrode assembly 1.

First cathode film 13 is disposed on first primary surface 11a. First cathode film 13 is disposed on first primary surface 11a so that first primary surface 11a on one side of the width direction D2 orthogonal to longitudinal direction D1 is exposed. Note that the width direction D2 is in parallel to axial direction Z of wound electrode assembly 1.

Second cathode film 14 is disposed on second primary surface 11b. Second cathode film 14 is disposed on second primary surface 11b so that the second primary surface 11b on one side of width direction D2 orthogonal to longitudinal direction D1 is exposed. Second cathode film 14 is disposed overlapping the first cathode film 13 in thickness direction T of positive electrode 10. Second cathode film 14 has approximately the same size as first cathode film 13.

First cathode film 13 and second cathode film 14 each include multiple high density regions R1 and multiple low density regions R2. High density regions R1 and low density regions R2 are alternately disposed along longitudinal direction D1 on each of first cathode film 13 and second cathode film 14. High density regions R1 and low density regions R2 each extend along width direction D2 orthogonal to thickness direction T and longitudinal direction D1.

High density region R1 of first cathode film 13 and low density region R2 of second cathode film 14 are arranged in thickness direction T, while sandwiching positive current collector 11. Low density region R2 of first cathode film 13 and high density region R1 of second cathode film 14 are arranged in thickness direction T, while sandwiching positive current collector 11.

The respective lengths of high density region R1 and low density region R2 in the length direction of first cathode film 13 are less than the thickness of first cathode film 13 in thickness direction T. Similarly, the respective lengths of high density region R1 and low density region R2 in the length direction of second cathode film 14 are less than the thickness of second cathode film 14 in thickness direction T.

In each of first cathode film 13 and second cathode film 14, high density regions R1 have densities 1.1 times or greater and 1.5 times or less than low density regions R2.

First cathode film 13 and second cathode film 14 are configured of positive electrode films 131 and 132 (see Fig. 4), respectively (described below), which include a positive active material.

Since negative electrode 20 has substantially the same configuration as positive electrode 10, a developed view and a cross-sectional view, etc. of negative electrode 20 are not shown. However, negative electrode 20, when expanded, has a belt-like shape extending along longitudinal direction D1 as well. Negative electrode 20 has a first end and a second end in longitudinal direction D1. The first end is the end (the inner peripheral end of the winding) located on the inner peripheral side of wound electrode assembly 1. The second end is the end (the outer peripheral end of the winding) located on the outer peripheral side of wound electrode assembly 1.

Again as shown in Fig. 1, negative electrode 20 includes a negative current collector 21, a second anode film 23, and a second negative electrode mixture layer 24. For example, negative current collector 21 is configured of a metallic foil such as copper. Negative current collector 21 has a first primary surface 21a and a second primary surface 21b that are aligned in the direction of thickness of negative plate 20. In the state of wound electrode assembly 1, that is, when negative electrode 20 is wound, first primary surface 21a faces the inner peripheral side of wound electrode assembly 1, and second primary surface 21b faces the outer peripheral side of wound electrode assembly 1.

Negative electrode 20 has mixture non-forming portion 22a and a mixture forming portion. In mixture non-forming portion 22a, negative current collector 21 is exposed from both second anode film 23 and second negative electrode mixture layer 24. Mixture forming portion is a portion of negative electrode 20 on which both second anode film 23 and second negative electrode mixture layer 24 are formed. Mixture non-forming portion 22a extends from the mixture forming portion to the other side of the width direction. Mixture non-forming portion 22a, being wound, is exposed from the mixture forming portion to other side Z2 of axial direction Z of wound electrode assembly 1.

Second anode film 23 is disposed on first primary surface 21a. Second anode film 23 is disposed on first primary surface 21a so that the end portion of the first primary surface 21a on the other side of the width direction orthogonal to the longitudinal direction is exposed.

Second negative electrode mixture layer 24 is disposed on second primary surface 21b. Second negative electrode mixture layer 24 is disposed on second primary surface 21b so that the end portion of the second primary surface 21b on the other side of the width direction orthogonal to the longitudinal direction is exposed. Second negative electrode mixture layer 24 is disposed overlapping the second anode film 23 in the direction of thickness of negative electrode 20. Second negative electrode mixture layer 24 has approximately the same size as second anode film 23.

Second anode film 23 and second negative electrode mixture layer 24 each include multiple high density regions and multiple low density regions. The high density regions and the low density regions are alternately disposed along the longitudinal direction in each of second anode film 23 and second negative electrode mixture layer 24. High density regions R1 and low density regions R2 each extend along the width direction.

High density region of second anode film 23 and low density region R2 of second negative electrode mixture layer 24 are arranged in the thickness direction, while sandwiching negative current collector 21. Low density region of second anode film 23 and high density region of second negative electrode mixture layer 24 are arranged in the thickness direction, while sandwiching negative current collector 21.

The respective lengths of the high density region and the low density region in the length direction of high density region of second anode film 23 are less than the thickness of high density region of second anode film 23 in the thickness direction. Similarly, the respective lengths of the high density region and the low density region in the length direction of second negative electrode mixture layer 24 are less than the thickness of second negative electrode mixture layer 24 in thickness direction.

In each of second anode film 23 and second negative electrode mixture layer 24, the high density regions have densities 1.1 times or greater and 1.5 times or less than the low density regions.

Second anode film 23 and second negative electrode mixture layer 24 each may be configured of a negative electrode film including a negative active material.

### (Process of Fabrication of Electrode)

Fig. 4 is a schematic view illustrating a process of fabrication of the positive electrode according to Embodiment 1. As shown in Fig. 4, positive electrode 10 can be fabricated by positive electrode films 131 and 132 described above being affixed to positive current collector 11.

Positive electrode film 131 has a first surface 131a and a second surface 131b aligned in thickness direction T. First surface 131a has a wavy shape in which peaks and valleys are alternately continuous lengthwise. Second surface 131b is formed flat.

Positive electrode film 132 has a first surface 132a and a second surface 132b aligned in thickness direction T. First surface 132a has a wavy shape in which peaks and valleys are alternately continuous lengthwise. Second surface 132b is formed flat.

Having positive electrode film 131 disposed on first primary surface 11a so that the wavy first surface 131a faces first primary surface 11a of positive current collector 11 and having positive electrode film 132 disposed on second primary surface 11b so that the wavy first surface 132a faces second primary surface 11b of positive current collector 11, these positive electrode films 131 and 132 and positive current collector 11 are pressed by a press unit 90, while being transferred.

Press unit 90 includes a pair of rollers 91 and 92. Positive current collector 11, having positive electrode film 131 disposed on first primary surface 11a and positive electrode film 132 disposed on second primary surface 11b, is pressed by the pair of rollers 91 and 92 as it passes between the pair of rollers 91 and 92. At this time, positive electrode film 131 is affixed to first primary surface 11a while the first surface 131a is being formed into flat on first primary surface 11a, and positive electrode film 132 is affixed to second primary surface 11b while the first surface 132a is being formed into flat on second primary surface 11b.

In longitudinal direction D1, positive electrode film 131 has peaks P1, valleys P2, and middle positions P3 between peaks P1 and valleys P2. A portion of positive electrode film 131 on first primary surface 11a between middle positions P3 adjacent to each other in longitudinal direction D1 with a peak P1 located therebetween is pressed into a high density region R1. Similarly, a portion of positive electrode film 131 between middle positions P3 adjacent to each other in longitudinal direction D1 with a valley P2 located therebetween is pressed into a low density region R2.

As positive electrode film 131 is pressed, first cathode film 13 is formed in which the high density region R1 and low density region R2 are alternately aligned in longitudinal direction D1.

Similarly, a portion of positive electrode film 132 on second primary surface 11b between middle positions P3 adjacent to each other in longitudinal direction D1 with a peak P1 located therebetween is pressed into a high density region R1. A portion of positive electrode film 132 between middle positions P3 adjacent to each other in longitudinal direction D1 with a valley P2 located therebetween is pressed into a low density region R2. As positive electrode film 132 is pressed, second cathode film 14 is formed in which the high density region R1 and low density region R2 are alternately aligned in longitudinal direction D1.

Positive electrode film 131 and positive electrode film 132 are disposed in a manner that peaks P1 of positive electrode film 131 and positive electrode film 132 are staggered in longitudinal direction D1. With peaks P1 of positive electrode film 131 and valleys P2 of positive electrode film 132 facing one another in thickness direction T and valleys P2 of positive electrode film 131 and peaks P1 of positive electrode film 132 facing one another in thickness direction T, positive electrode film 131 and positive electrode film 132 are disposed on positive current collector 11.

Due to this, as positive electrode films 131 and 132 and positive current collector 11 are pressed while positive current collector 11 is disposed between positive electrode films 131 and 132, high density region R1 of first cathode film 13 and low density region R2 of second cathode film 14 are arranged in thickness direction T, while sandwiching positive current collector 11. Low density region R2 of first cathode film 13 and high density region R1 of second cathode film 14 are arranged in thickness direction T, while sandwiching positive current collector 11.

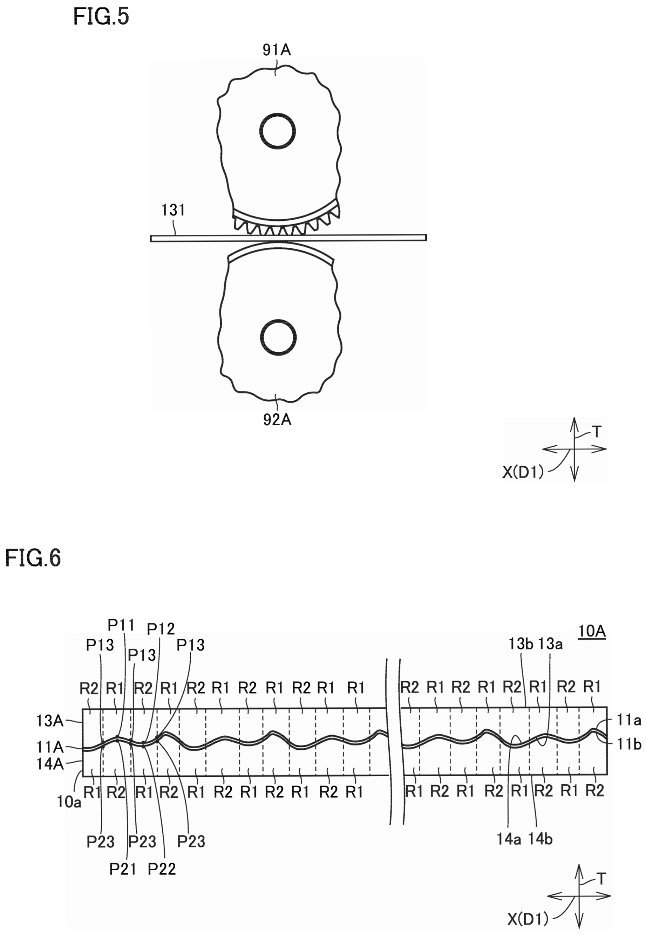

Fig. 5 is a schematic view illustrating a process of forming a positive electrode mixture sheet for use in the positive electrode according to Embodiment 1. As shown in Fig. 5, to prepare positive electrode films 131 and 132 having wavy shapes in the above discussions, for example, positive electrode films 131 and 132 having flat, plate-like front and rear surfaces are allowed to pass between first roller 91A having an uneven surface and second roller 92A having a smooth surface. Due to this, positive electrode films 131 and 132 having wavy shapes are fabricated whose first surfaces 131a and 132a located on the first roller 91A side have wavy shapes, and second surfaces 131b and 132b located on the second roller 92A side are flat. First roller 91A may have a periodically uneven surface.

In the above discussions, first roller 91A has the uneven surface. However, the present disclosure is not limited thereto. Both first roller 91A and second roller 92A may have smooth surfaces. In this case, positive electrode films 131 and 132 having flat, plate-like front and rear surfaces may be allowed to pass between first roller 91A and second roller 92A, while ultrasonic vibrations are being applied, using an ultrasonic vibration apparatus, from one of first roller 91A and second roller 92A to the other.

Note that since negative electrode 20 is formed substantially in the same manner as positive electrode 10, details of the fabrication process are omitted.

### (Electrode Film)

Positive electrode films 131 and 132 may be configured of a free-standing film. Similarly, the negative electrode film may be configured of a free-standing film too.

The free-standing film represents a film that can maintain the film profile by its own, without a support. The free-standing film can have a strength that can withstand the roll conveyance or the like, without a support such as a current collector described below. The range of the tensile strength of the free-standing film may have only an upper or lower limit or have upper and lower limits by selecting any one numeric value or any two numeric values from a group consisting of 0.1 MPa, 0.2 MPa, 0.3 MPa, 0.5 MPa, 0.6 MPa, 0.7 MPa, 0.8 MPa, 0.9 MPa, and 1.0 MPa, for example. The range may or may not be inclusive of its endpoints. The range of the tensile strength of the free-standing film may be, for example, from 0.1 MPa to 1.0 MPa. The range of the tensile strength of the free-standing film may be, for example, 0.5 MPa or greater. The free-standing film having the tensile strength of 0.5 MPa or greater is expected to facilitate, for example, web handling or the like.

The tensile strengths of the respective electrode films described above can be measured by the following method, for example. A test specimen is cut from an electrode film. The test specimen has a planar size of about 30 mm × 30 mm, for example. A tensile test is carried out on the test specimen at a speed of 2 mm/s by Texture Analyzer (e.g., manufactured by EKO INSTRUMENTS CO., LTD.). The maximum load during stretching of the test specimen is measured. The tensile strength is determined by the following equation. An arithmetic mean of three test specimens is employed as a tensile strength value. $Rm = \left(F\times 0.0098\right) / \left(t⋅W\right)$
Rm: Tensile Strength [MPa]
F: Maximum Load [g]
t: Thickness of Test Specimen [mm]
W: Width of Test Specimen [mm]

The electrode film can have any planner shape. The planner shape of the electrode film may be, for example, a belt-like shape, a rectangular shape, a round shape, etc. The dimensions (thickness, length, width, etc.) of the electrode film can be optionally modified, depending on an electrode design, for example. The range of thickness of the electrode film may have only an upper or lower limit or have upper and lower limits by selecting any one numeric value or any two numeric values from a group consisting of 5 µm, 10 µm, 25 µm, 50 µm, 75 µm, 100 µm, 150 µm, 200 µm, 250 µm, 300 µm, 400 µm, 500 µm, 600 µm, 700 µm, 800 µm, 900 µm, and 1000 µm, for example. The range may or may not be inclusive of its endpoints. The range of thickness of the electrode film may be, for example, from 5 µm to 1000 µm. The range of density of the electrode film may have only an upper or lower limit or have upper and lower limits by selecting any one numeric value or any two numeric values from a group consisting of 0.5 g/cm³, 1.0 g/cm³, 1.5 g/cm³, 2.0 g/cm³, 2.5 g/cm³, 3.0 g/cm³, 3.5 g/cm³, 4.0 g/cm³, 4.5 g/cm³, and 5.0 g/cm³, for example. The range may or may not be inclusive of its endpoints. The range of density of the electrode film may be, for example, from 0.5 g/cm³ to 5.0 g/cm³.

### (Compositions)

The electrode film includes an electrode active material and a first binder. The first binder includes a fibrous binder. In other others, the electrode film includes an electrode active material and a fibrous binder. The electrode film may further include, for example, a second binder, a conductive material, a solid electrolyte, etc. The electrode film may include, for example, 0.1% to 10% first binder, in mass fraction, 0 to 10% second binder, 0 to 10% conductive material, 0 to 30% solid electrolyte, and the remaining % electrode active material.

### (Electrode Active Material)

The electrode active material is a powder. For example, the electrode active material may exhibit a monomodal particle size distribution. The particle size distribution may be a volume distribution or a number distribution. The volume distribution can be measured by laser diffraction. The number distribution can be measured by microscopy. "D50" indicates the particle size achieving a cumulative frequency of 50% in a cumulative distribution. The range of D50 of the electrode active material may have only an upper or lower limit or have upper and lower limits by selecting any one numeric value or any two numeric values from a group consisting of 0.1 µm, 0.5 µm, 1 µm, 3 µm, 5 µm, 10 µm, 15 µm, 20 µm, 25 µm, and 30 µm, for example. The range may or may not be inclusive of its endpoints. For example, the range of D50 of the electrode active material may be from 0.1 µm to 30 µm.

For example, the electrode active material may exhibit a bimodal or multimodal particle size distribution. For example, if the particle size distribution (the frequency distribution) is bimodal, particles belonging to a peak having a larger particle size are "large particles." Particles belonging to a peak having a smaller particle size are "small particles." The mode diameter of each peak may be regarded as a particle size of each particle. The "mode diameter" indicates a particle size of a peak top of the frequency distribution. The range of "D_{L}/D_{S}," which is a ratio of the particle size "D_{L}" of larger particles to the particle size "D_{S}" of smaller particles, may have only an upper or lower limit or have upper and lower limits by selecting any one numeric value or any two numeric values from a group consisting of 1.2, 1.5, 2.0, 3.0, 4.0, and 5.0, for example. The range may or may not be inclusive of its endpoints. For example, a relationship such as "1.2 ≤ D_{L}/D_{S} ≤ 5.0" may be met.

The electrode active material may be primary particles or secondary particles. The electrode active material can have any particle shape. The particle shape may be, for example, a sphere shape, an ellipsoidal shape, a scale-like shape, a plate shape, a pillar shape, a massive shape, an unstructured shape, etc.

The electrode active material may be granules. The granules can be formed by any method. For example, granules may be formed by spray drying, stirring granulation, etc. The sphericity of the granules (the secondary particles) may be adjusted by granulation. The "sphericity" indicates circularity in an SEM image (a two-dimensional image). The sphericity (circularity) is determined by the following equation. An arithmetic mean of ten particles is employed as the sphericity. $ψ = 4 πS / {L}^{2}$
ψ: Sphericity (circularity)
π: Pi
S: Cross-sectional area of a particle (the area of a region surrounded by the particle contour)
L: Perimeter of Particles (the length of the particle contour)

The range of the sphericity "ψ" of the electrode active material may have only an upper or lower limit or have upper and lower limits by selecting any one numeric value or any two numeric values from a group consisting of 0.1, 0.2, 0.3, 0.4, 0.5, 0.6, 0.7, 0.8, 0.9, and 1.0, for example. The range may or may not be inclusive of its endpoints. For example, a relationship such as "0.1 ≤ ψ ≤ 1.0" may be met.

For the negative electrode film, a negative active material is used as the electrode active material. The negative active material may include, for example, at least one selected from a group consisting of natural graphite (scale-like graphite, spherical graphite), artificial graphite, soft carbon, hard carbon, silicon, silicon oxide, a silicon-based alloy, a silicon-carbon composite material "Si-C," lithium silicate, tin, tin oxide, a tin-based alloy, and lithium titanate. For example, the spherical graphite may be covered with amorphous carbon. For example, natural graphite, artificial graphite, soft carbon, and hard carbon can be, collectively, referred to as "a carbon-based active material." The silicon can include any crystalline phase. The silicon may include at least one selected from a group consisting of a clathrate I-type phase, a clathrate II-type phase, and a diamond phase, for example. Si-C indicates composite particles including carbon and at least one of silicon and silicon oxide. For example, silicon may be supported in internal voids in carbon particles. The carbon particles may be graphite particles or amorphous carbon particles. For example, silicon, silicon oxide, a silicon-based alloy, and a silicon-carbon composite material can be, collectively, referred to as "an Si-based active material."

The negative active material may be, for example, a mixture of natural graphite and artificial graphite. The mass ratio "Natural Graphite: Artificial Graphite" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Natural Graphite: Artificial Graphite = 1:9 to 9:1" may be met.

The negative active material may be, for example, a mixture of a carbon-based active material and an Si-based active material. The mass ratio "Carbon-based Active Material: Si-based Active Material" may be, for example, in a range whose endpoints are defined by any two sets selected from a group consisting of "1:99," "5:95," "10:90," "20:80," "30:70," "40:60," "50:50," "60:40," "70:30," "80:20," "90:10," "95:5," and "99:1." For example, a relationship such as a mass ratio "Carbon-based Active Material: Si-based Active Material = 1:99 to 99:1" may be met.

For the positive electrode film, a positive active material is used as the electrode active material. The positive active material may include at least one selected from a group consisting of, for example, layered compounds, a rocksalt compound, a spinel compound, and an olivine-type compound. For example, the positive active material may be a mixture of the layered compounds and the olivine-type compound. The mass ratio "Layered Compounds: Olivine-type Compound" may be, for example, in a range whose endpoints are defined by any two sets selected from a group consisting of "1:9," "2:8," "3:7," "4:6," "5:5," "6:4," "7:3," "8:2," and "9:1." For example, a relationship such as a mass ratio "Layered Compounds: Olivine-type Compound = 1:9 to 9:1" may be met.

The positive active material may include at least one selected from a group consisting of, for example, Li[NiCoMn]O₂ (the layered compounds), Li[NiCoAl]O₂ (the layered compounds), LiMnO₂ (a rocksalt compound), Li[NiMn]₂O₄ (the spinel compound), and Li[MnFe]PO₄ (the olivine-type compound). Note that the recitation such as [NiCoMn] indicates that the sum of the ratios of the compositions in square brackets is 1. Insofar as the sum is 1, the respective components in square brackets can take any composition ratio. For example, the ratio of compositions of some components is allowed to be zero.

For example, the layered compounds may have a composition as given in general formula "LiₓNiₐCo_{b}M_{c}O_{y}," where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The relationship "a + b + c = 1" is met in the formula. Insofar as this relationship is met, the ranges of "a," "b," and "c" may, independently, have only an upper or lower limit or have upper and lower limits by selecting any one numeric value or any two numeric values from a group consisting of 0, 0.05, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1," "0 ≤ b ≤ 1," "0 ≤ c ≤ 1," etc. may be met. For example, relationships such as "0.5 ≤ a ≤ 0.9," "0.05 ≤ b ≤ 0.5," "0.05 ≤ c ≤ 0.5," etc. may be met. "M" in the formula may be at least one selected from a group consisting of Mn and Al, for example. The range of "y" in the formula may have only an upper or lower limit or have upper and lower limits by selecting any one numeric value or any two numeric values from a group consisting of 1.6, 1.7, 1.8, 1.9, 2.0, 2.1, 2.2, 2.3, and 2.4, for example. The range may or may not be inclusive of its endpoints. For example, a relationship such as "1.6 ≤ y ≤ 2.4" may be met.

The layered compounds may include at least one selected from a group consisting of LiₓNiO_{y}, LiₓCoO_{y}, LiₓMnO_{y}, LiₓNi_{1/3}Co_{1/3}Mn_{1/3}O_{y}, LiₓNi_{0.4}Co_{0.3}Mn_{0.3}O_{y}, LiₓNi_{0.5}Co_{0.2}Mn_{0.3}O_{y}, LiₓNi_{0.5}Co_{0.3}Mn_{0.2}O_{y}, LiₓNi_{0.5}Co_{0.4}Mn_{0.1}O_{y}, LiₓNi_{0.5}Co_{0.1}Mn_{0.4}O_{y}, LiₓNi_{0.6}Co_{0.3}Mn_{0.1}O_{y}, LiₓNi_{0.6}Co_{0.2}Mn_{0.2}O_{y}, LiₓNi_{0.6}Co_{0.1}Mn_{0.3}O_{y}, LiₓNi_{0.7}Co_{0.2}Mn_{0.1}O_{y}, LiₓNi_{0.7}Co_{0.1}Mn_{0.2}O_{y}, LiₓNi_{0.8}Co_{0.1}Mn_{0.1}O_{y}, LiₓNi_{0.8}Co_{0.15}Al_{0.05}O_{y}, and LiₓNi_{0.9}Co_{0.05}Mn_{0.05}O_{y}, for example. For example, relationships such as "0.1 ≤ x ≤ 1.5," "1.6 ≤ y ≤ 2.4," etc. may be met in the respective formulas.

For example, the olivine-type compound may have a composition as given in general formula "LiMPO₄," where "M" may be at least one selected from a group consisting of Fe, Ni, Co, and Mn, for example.

The olivine-type compound may have a composition as given in a general formula "LiₓMn₁₋ₐFeₐPO_{y}", for example, where the range of "x" may have only an upper or lower limit or have upper and lower limits by selecting any one numeric value or any two numeric values from a group consisting of 0.1, 0.2, 0.3, 0.4, 0.5, 0.6, 0.7, 0.8, 0.9, 1.0, 1.1, 1.2, 1.3, 1.4, and 1.5, for example. The range may or may not be inclusive of its endpoints. For example, a relationship such as "0.1 ≤ x ≤ 1.5" may be met. The range of "a" in the formula may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1.0, for example. The range may or may not be inclusive of its endpoints. For example, relationships such as "0 ≤ a ≤ 1.0," "0.1 ≤ a ≤ 0.5," etc. may be met. The range of "y" in the formula may have only an upper or lower limit or have upper and lower limits by selecting any one numeric value or any two numeric values from a group consisting of 3.6, 3.7, 3.8, 3.9, 4.0, 4.1, 4.2, 4.3, and 4.4, for example. The range may or may not be inclusive of its endpoints. For example, a relationship such as "3.6 ≤ y ≤ 4.4" may be met.

The olivine-type compound may include at least one selected from a group consisting of LiₓMnPO_{y}, LiₓMn_{0.9}Fe_{0.1}PO_{y}, LiₓMn_{0.8}Fe_{0.2}PO_{y}, LiₓMn_{0.7}Fe_{0.3}PO_{y}, LiₓMn_{0.6}Fe_{0.4}PO_{y}, LiₓMn_{0.5}Fe_{0.5}PO_{y}, LiₓMn_{0.4}Fe_{0.6}PO_{y}, LiₓMn_{0.3}Fe_{0.7}PO_{y}, LiₓMn_{0.2}Fe_{0.8}PO_{y}, LiₓMn_{0.1}Fe_{0.9}PO_{y}, and LiₓFePO_{y}, for example. For example, relationships such as "0.1 ≤ x ≤ 1.5," "3.6 ≤ y ≤ 4.4," etc. may be met in the respective formulas.

Any dopant may be introduced into the positive active material. The dopant may be an interstitial dopant or a substitutional dopant. The dopant may include at least one selected from a group consisting of B, C, N, halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid, for example. A mass fraction (the level of doping) of the dopant may have only an upper or lower limit or have upper and lower limits by selecting any one numeric value or any two numeric values from a group consisting of 0.01%, 0.1%, 1%, 3%, and 5%, for example. The range may or may not be inclusive of its endpoints. The range of the doping may be, for example, from 0.01% to 5%.

### (Conductive Material)

The conductive material can form an electron conductive path within the electrode film. The conductive material may include at least one selected from a group consisting of acetylene black, Ketjen black (registered trademark), thermal black, furnace black, carbon fiber, carbon nanotube, graphene flakes, metal fiber, and metal powders, for example. If the electrode active material is a positive active material, the group of materials that can constitute the conductive material may further include natural graphite, artificial graphite, etc., for example.

The conductive material may be, for example, a powder. The conductive material may have small D50, as compared to the electrode active material. The range of D50 of the conductive material may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the conductive material may be, for example, from 0.01 µm to 5 µm.

The range of the mass fraction of the conductive material in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. For example, the range of the mass fraction of the conductive material may be from 0% to 10%.

### (Solid Electrolyte)

The solid electrolyte can form an ionic conductive path within the electrode film. The solid electrolyte may include at least one selected from a group consisting of a sulfide solid electrolyte, a halide solid electrolyte, an oxide solid electrolyte, a hydride solid electrolyte, and a nitride solid electrolyte, for example. The sulfide solid electrolyte may include at least one selected from a group consisting of an amorphous phase, a crystalline phase, and a glass-ceramic (a crystallized glass) phase. The crystalline phase may be of argyrodite type, LGPS type, etc., for example. The sulfide solid electrolyte may include at least one selected from a group consisting of LiI-LiBr-Li₃PS₄, Li₂S-SiS₂, LiI-Li₂S-SiS₂, LiI-Li₂S-P₂Ss, LiI-Li₂O-Li₂S-P₂S₅, LiI-Li₂S-P₂O₅, LiI-Li₃PO₄-P₂S₅, Li₂S-GeS₂-P₂S₅, Li₂S-P₂S₅, Li₁₀GeP₂S₁₂, Li₄P₂S₆, Li₇P₃S₁₁, Li₃PS₄, and Li₇PS₆, for example. For example, "LiI-LiBr-Li₃PS₄" indicates a sulfide solid electrolyte that is generated by mixing LiI, LiBr, and Li₃PS₄ in any mass ratio. For example, the sulfide solid electrolyte may be generated by a mechanochemical method. The mixing ratio may be identified by prefixing a number to each raw material. For example, "10LiI-15LiBr-75Li₃PS₄" indicates that the mixing ratio (the mass ratio) is "LiI:LiBr:Li₃PS₄ = 10:15:75."

For example, the sulfide solid electrolyte may have a composition as given in general formula "yLiI-zLiBr-(100-y-z)[xLi₂S-(1-x)P₂S₅]," where the range of "x" may have only an upper or lower limit or have upper and lower limits by selecting any one numeric value or any two numeric values from a group consisting of 0.1, 0.2, 0.25, 0.3, 0.4, 0.5, 0.6, 0.7, 0.75, 0.8, and 0.9, for example. The range may or may not be inclusive of its endpoints. For example, a relationship such as "0.1 ≤ x ≤ 0.9" may be met. The relationship "0 < 100-y-z ≤ 100" is met in the formula. Insofar as this relationship is met, the ranges of "y" and "z" may, independently, have only an upper or lower limit or have upper and lower limits by selecting any one numeric value or any two numeric values from a group consisting of 0, 5, 10, 15, 20, 25, and 30, for example. The range may or may not be inclusive of its endpoints. For example, relationships such as "0 ≤ y ≤ 30," "0 ≤ z ≤ 30," etc. may be met.

For example, the sulfide solid electrolyte may have a composition as given in general formula "Li₄₋ₓM₁₋ₓPₓS₄," where the range of "x" may have only an upper or lower limit or have upper and lower limits by selecting any one numeric value or any two numeric values from a group consisting of 0, 0.1, 0.2, 0.3, 0.4, 0.5, 0.6, 0.7, 0.8, 0.9, and 1, for example. The range may or may not be inclusive of its endpoints. For example, a relationship such as "0 < x < 1" may be met. "M," in the formula, may include at least one selected from a group consisting of Al, Zn, In, Ge, Si, Sn, Sb, Ga, and Bi, for example.

For example, the sulfide solid electrolyte may have a composition as given in general formula "Li₁₀₊ₓGe₁₊ₓP₂₋ₓS₁₂," where the range of "x" may have only an upper or lower limit or have upper and lower limits by selecting any one numeric value or any two numeric values from a group consisting of 0, 0.1, 0.2, 0.3, 0.4, 0.5, 0.6, and 0.7, for example. The range may or may not be inclusive of its endpoints. For example, a relationship such as "0 < x ≤ 0.7" may be met. The sulfide solid electrolyte given in this formula may include an LGPS-type crystalline phase, for example.

For example, the halide solid electrolyte may have a composition as given in general formula "Li₆₋ₙₐMₐX₆," where "n" indicates an oxidation number of "M." "M" may include an atom having an oxidation number of +3, for example. "M," in the formula, may include an atom having an oxidation number of +4, for example. "M" may include at least one selected from a group consisting of Y, Al, Ti, Zr, Ca, and Mg, for example. For example, a relationship such as "0 < a < 2" may be met. "X," in the formula, may include at least one selected from a group consisting of F, Cl, Br, and I, for example.

The solid electrolyte may be, for example, a powder. The solid electrolyte may have small D50, as compared to the electrode active material. The range of D50 of the solid electrolyte may have only an upper or lower limit or have upper and lower limits by selecting any one numeric value or any two numeric values from a group consisting of 0.01 µm, 0.05 µm, 0.1 µm, 0.5 µm, 1 µm, 3 µm, and 5 µm, for example. The range may or may not be inclusive of its endpoints. The range of D50 of the solid electrolyte may be, for example, from 0.01 µm to 5 µm.

The range of the volume fraction of the solid electrolyte in the electrode film may have only an upper or lower limit or have upper and lower limits by selecting any one numeric value or any two numeric values from a group consisting of 0%, 1%, 5%, 10%, 20%, 30%, 40%, 50%, 60%, and 70%, for example. The range may or may not be inclusive of its endpoints. For example, the range of the volume fraction of the solid electrolyte may be from 0% to 70%.

### (First Binder)

The first binder includes a fibrous binder. The first binder may be, substantially, formed of a fibrous binder. For example, the fibrous binder may be a particulate binder (an aggregate) fiberized (fibrillated) by having a shear force or the like applied thereto. For example, as a mixture, including a particulate binder to be a fibrous binder and an electrode active material, passes through a roll gap, a shear force can be applied to the particulate binder. As the particulate binder turns into a fibrous binder, an electrode film can be deposited on the fibrous binder. The roll processing may be performed once or repeated multiple times. Prior to the roll processing, a shear force may be applied to the mixture by a jet mill, a stirring granulator, etc., for example. For example, in addition to the application of shear force, the mixture may be heated at a temperature in a range from 30°C to 150°C to promote the fibrillation of the particulate binder. The particulate binder may be fully or partially fibrillated. In other others, the first binder may contain particulate components too.

The "fibrous" indicates that the aspect ratio (a ratio of the major axial diameter to the minor axial diameter) is 10 or greater. Materials whose aspect ratio is less than 10 are regarded as being "particulate." A fibrous material may have an aspect ratio (a ratio of the fiber length to the fiber diameter) of 100 or greater, for example. The minor axial diameter, the major axial diameter, the fiber diameter, and the fiber length are measured by microscopy. An arithmetic mean of ten fibrous materials to be measured is employed as the aspect ratio. The short-side length and the long-side length of a minimum bounding rectangle "MBR" of the fibrous materials to be measured are regarded as the minor axial diameter and the major axial diameter, respectively. The fiber diameter indicates a dimension of a fibrous material to be measured in a direction orthogonal to the axial direction of the fibrous material to be measured. The fiber length indicates the entire length, in the axial direction, of the fibrous material to be measured.

The fibrous binder includes, for example, a polymer composition. The polymer composition may be a homopolymer, a copolymer, a polymer blend, or a polymer alloy. The fibrous binder may include, for example, polytetrafluorethylene (PTFE) or the like. In addition to PTFE, the fibrous binder may include an additional component. The additional component may include at least one selected from a group consisting of polyolefin, cellulose, polyether, and polysiloxane, for example. The additional component and the PTFE may form at least one selected from a group consisting of a polymer blend, a polymer alloy, and a copolymer. The range of the mass fraction of PTFE or the range of the mass fraction of tetrafluoroethylene (TFE)-derived component to the fibrous binder may have only an upper or lower limit or have upper and lower limits by selecting any one numeric value or any two numeric values from a group consisting of 0%, 10%, 20%, 30%, 40%, 50%, 60%, 70%, 80%, 90%, 95%, 99%, and 100%, for example. The range may or may not be inclusive of its endpoints. The range of the mass fraction of PTFE to the fibrous binder may be, for example, from 0% to 100%.

The range of a number-average molecular weight "Mn" of polymers constituting the fibrous binder may have only an upper or lower limit or have upper and lower limits by selecting any one numeric value or any two numeric values from a group consisting of 10 × 10⁴, 50 × 10⁴, 100 × 10⁴, 150 × 10⁴, 200 × 10⁴, 300 × 10⁴, 400 × 10⁴, 500 × 10⁴, 1000 × 10⁴, 2000 × 10⁴, and 3000 × 10⁴, for example. The range may or may not be inclusive of its endpoints. The range of the number-average molecular weight may be, for example, from 10 × 10⁴ to 3000 × 10⁴. The number-average molecular weight may be determined from a standard specific gravity, for example. A measurement specimen is prepared in conformity with "ASTM D-4895 98." The standard specific gravity is measured by a water displacement method in conformity with "ASTM D-792."

The range of the fiber diameter of the fibrous binder may have only an upper or lower limit or have upper and lower limits by selecting any one numeric value or any two numeric values from a group consisting of 1 nm, 5 nm, 10 nm, 15 nm, 20 nm, 50 nm, 100 nm, 200 nm, 500 nm, and 1000 nm, for example. The range may or may not be inclusive of its endpoints. The range of the fiber diameter may be, for example, from 1 nm to 1000 nm.

The fibrous binder can form a fiber matrix. For example, the film profile of an electrode film may be maintained by the fiber matrix holding an electrode active material (a powder). The fiber matrix may be evaluated by fiber density, for example. For example, the fiber density can be measured by the following method. A cross-sectional SEM image of an electrode film is prepared. A linear line of 20 µm is set at any position in the cross-sectional SEM image. Fibrous portions intersecting the linear line are counted, thereby determining the fiber density [unit: linear line/20 µm]. The fiber density is measured at three or more positions in the cross-sectional SEM image. An arithmetic mean of the three or more positions is employed as the fiber density. The range of the fiber density may have only an upper or lower limit or have upper and lower limits by selecting any one numeric value or any two numeric values from a group consisting of 1, 2, 5, 10, 20, 40, 60, 80, and 100, for example. The range may or may not be inclusive of its endpoints. The range of the fiber density may be, for example, from 1 to 100.

The range of the mass fraction of the first binder in the electrode film may have only an upper or lower limit or have upper and lower limits by selecting any one numeric value or any two numeric values from a group consisting of 0.1%, 0.5%, 1%, 2%, 3%, 4%, 5%, 6%, 7%, 8%, 9%, and 10%, for example. The range may or may not be inclusive of its endpoints. The range of the mass fraction of the first binder in the electrode film may be, for example, from 0.1% to 10%.

### (Second Binder)

The second binder can take any form. The second binder may take a form of particles, a film, fibers, etc., for example. For example, the second binder may have a stronger cohesive ability than the first binder. For example, an electrode film may be affixed to a current collector by the second binder. The second binder may include at least one selected from a group consisting of polyvinylidene fluoride (PVdF), vinylidene fluoride-co-hexafluoropropylene (PVdF-HFP), carboxymethyl cellulose (CMC), polyacrylic acid (PAA), polyvinyl alcohol (PVA), polyvinylpyrrolidone (PVP), polyethylene oxide (PEO), styrene-butadiene rubber (SBR), acrylonitrile-butadiene rubber (NBR), polyethylene (PE), polypropylene (PP), polyacrylonitrile (PAN), polyoxyethylene alkyl ether, polyimide (PI), polyamide imide (PAI), and derivatives thereof, for example.

The range of the mass fraction of the second binder in the electrode film may have only an upper or lower limit or have upper and lower limits by selecting any one numeric value or any two numeric values from a group consisting of 0%, 0.1%, 0.5%, 1%, 2%, 3%, 4%, 5%, 6%, 7%, 8%, 9%, and 10%, for example. The range may or may not be inclusive of its endpoints. The range of the mass fraction of the second binder in the electrode film may be, for example, from 0% to 10%.

A mass ratio "First Binder: Second Binder" may be, for example, in a range whose endpoints are defined by any two sets selected from a group consisting of "1:9," "2:8," "3:7," "4:6," "5:5," "6:4," "7:3," "8:2," "9:1," and "10:0." For example, a relationship such as a mass ratio "First Binder: Second Binder = 1:9 to 10:0" may be met.

### (Additional Components)

The electrode film may include any additional components. The additional components include, for example, an inorganic filler, an organic filler, a surface modification agent, a dispersant, a lubricant, a flame retardant, a protectant, flux, a coupling agent, an adsorbent, etc. The additional component may include, for example, polyoxyethylene allylphenyl ether phosphate, zeolite, a silane coupling agent, molybdenum sulfide, tungsten oxide, etc.

### (Summary)

As described above, according to the electrode of Embodiment 1, on the first and second primary surfaces of at least one of the positive current collector 11 and the negative current collector 21, the high density regions and the low density regions are alternately disposed along the length direction of the at least one current collector, and a high density region and a low density region are disposed facing each other in the thickness direction of the at least one current collector. Due to this, the high density regions and the low density regions are alternately disposed on the first surface and the second surface of the at least one current collector along the length direction. Thus, the low density regions and the high density regions are disposed in a generally uniform manner. As a result, diffusion of the electrolyte solution can be promoted.

Note that if the high density regions and the low density regions are alternately disposed on the first primary surface and the second primary surface of both the positive current collector 11 and the negative current collector 21 along the length direction, and the high density region and the low density region are disposed facing each other in the thickness direction, diffusion of the electrolyte solution can be promoted more effectively.

In addition, in the mixture layer having the high density regions and the low density regions, the lengths of the high density regions and the low density regions in the length direction of the current collector are made less than the thickness of the mixture layer in the thickness direction of the electrode, thereby allowing the low density regions to be disposed finely across in a plane. Due to this, diffusion of the electrolyte solution can be promoted effectively.

Furthermore, in the present embodiment, high density region R1 of each of positive electrode 10 and negative electrode 20 has a density 1.1 times or greater and 1.5 times or less than low density region R2, thereby imparting flexibility to wound electrode assembly 1.

Note that even if one of positive electrode 10 and negative electrode 20 includes high density regions R1 and low density regions R2 as described above, flexibility can be imparted to wound electrode assembly 1 to some extent by high density region R1 having a density 1.1 times or greater and 1.5 times or less than low density region R2.

Moreover, wound electrode assembly 1 and secondary battery 100 that use the electrode according to Embodiment 1 achieves the same effects as described.

### (Embodiment 2)

Fig. 6 is a schematic cross sectional view of a positive electrode according to Embodiment 2. Referring to Fig. 6, a positive electrode 10A according to Embodiment 2 is now described.

As shown in Fig. 6, positive electrode 10A according to Embodiment 2 differs from positive electrode 10 according to Embodiment 1 in shape of positive current collector 11A, first cathode film 13A, and second cathode film 14A. The other configurations are substantially the same.

Positive current collector 11A has a wavy shape meandering in a thickness direction T relative to the length direction. Due to this, a first primary surface 11a of positive current collector 11A includes protrusions P11 and recesses P12 alternately aligned in the length direction and middle portions P13 located between protrusions P11 and recesses P12.

Protrusions P11 protrude in thickness direction T toward first cathode film 13A, and recesses P12 recede in thickness direction T into second cathode film 14A.

First primary surface 11a includes a first region and a second region, the first region being a portion of first primary surface 11a between a pair of middle portions P13 adjacent to each other in the length direction of positive electrode 10A, with a protrusion P11 located between the pair of middle portions P13, the second region being a portion of first primary surface 11a between a pair of middle portions P13 adjacent to each other in the length direction of positive electrode 10A, with a recess P12 located between the pair of middle portions P13.

Second primary surface 11b of positive current collector 11A includes protrusions P21 and recesses P22 alternately aligned in the length direction, and middle portions P23 located between protrusions P21 and recesses P22.

Protrusions P21 protrude in thickness direction T toward first cathode film 13A, and recesses P22 recede in thickness direction T into second cathode film 14A.

Second primary surface 11b includes a first region and a second region, the first region being a portion of second primary surface 11b between a pair of middle portions P23 adjacent to each other in the length direction of positive electrode 10A, with a protrusion P21 located between the pair of middle portions P23, the second region being a portion of second primary surface 11b between a pair of middle portions P23 adjacent to each other in the length direction of positive electrode 10A, with a recess P22 located between the pair of middle portions P23.

First cathode film 13A has a first surface 13a in contact with first primary surface 11a, and a second surface 13b located opposite the first surface 13a in thickness direction T. First surface 13a has a wavy shape following first primary surface 11a. Second surface 13b is a flat surface.

In the length direction, the regions of first cathode film 13A along the first regions of first primary surface 11a are high density regions R1, and the regions of first cathode film 13A along the second regions of first primary surface 11a are low density regions R2.

Second cathode film 14A has a first surface 14a in contact with second primary surface 11b, and a second surface 14b located opposite the first surface 14a in thickness direction T. First surface 14a has a wavy shape following second primary surface 11b. Second surface 14b is a flat surface.

In the length direction, the regions of second cathode film 14A along the first regions of second primary surface 11b are low density regions R2, and the regions of second cathode film 14A along the second regions of second primary surface 11b are high density regions R1.

Note that negative electrode 20 may be configured in a similar manner to positive electrode 10. Specifically, the negative current collector has wavy shape similar to positive current collector 11A. In this case, the second anode film has the first surface that is in contact with the first primary surface of the negative current collector and has a wavy shape following the first primary surface, and the second surface that is a flat surface and located opposite the first surface in the thickness direction. Similarly, the second negative electrode mixture layer has the first surface that is in contact with the second primary surface of the negative current collector and has a wavy shape following the second primary surface, and the second surface that is a flat surface and located opposite the first surface in the thickness direction. Moreover, high density regions R1 and low density regions R2 in the second anode film and the second negative electrode mixture layer have the same positional relationship as the positive electrode 10.

The electrode (positive electrode 10 or negative electrode 20) according to Embodiment 2, even if it is configured as described above, achieves substantially the same effects as Embodiment 1. Wound electrode assembly 1 and secondary battery 100 using the electrode according to Embodiment 2 also achieve the same effects as described above.

### (Fabrication Process)

The process of fabrication of the electrode according to Embodiment 2 is performed in conformity with the process of fabrication of the electrode according to Embodiment 1 described above. In Embodiment 2, having positive electrode film 131 disposed on first primary surface 11a so that the wavy first surface 131a faces first primary surface 11a of positive current collector 11 having positive electrode film 132 disposed on second primary surface 11b so that the wavy first surface 132a faces second primary surface 11b of positive current collector 11, as positive electrode films 131 and 132 and positive current collector 11 are pressed by press unit 90 while being transferred, positive current collector 11 is formed wavy due to the wavy first primary surface 131a and wavy second primary surface 132a.

While in Embodiments 1 and 2, as positive electrode film 131, positive current collector 11, and positive electrode film 132 are pressed by a pair of rollers 91 and 92, second primary surfaces 131b and 132b are formed flat, it should be noted that the present disclosure is not limited thereto. Upon the press, second primary surfaces 131b and 132b may be formed wavy. In this case, a separate planarization process may be included so that second primary surfaces 131b and 132b turn into flat surfaces. The same is true for when fabricating negative electrode 20.

### (Other Variations)

In the above discussions, both positive electrode 10 and negative electrode 20 include multiple high density regions and multiple low density regions. However, the present disclosure is not limited thereto. At least one of positive electrode 10 and negative electrode 20 may include multiple high density regions and multiple low density regions. In this case, if one electrode of positive electrode 10 and negative electrode 20 does not include multiple high density regions and multiple low density regions, the one electrode may be formed by the current collector being coated with slurry.

### (Appended Note)

As described above, the present embodiment includes disclosure as follows:

### [Configuration 1]

An electrode, including:
a current collector having a first primary surface located on one side of a thickness direction of the electrode and a second primary surface located on the other side of the thickness direction, the current collector being elongated and extending along a length direction of the electrode orthogonal to the thickness direction;
a first electrode film disposed on the first primary surface; and
a second electrode film disposed on the second primary surface, wherein
the first electrode film and the second electrode film each include a plurality of high density regions and a plurality of low density regions,
the plurality of high density regions and the plurality of low density regions are disposed alternately along the length direction,
a high density region of the plurality of high density regions of the first electrode film and a low density region of the plurality of low density regions of the second electrode film are arranged in the thickness direction, sandwiching the current collector, and
a low density region of the plurality of low density regions of the first electrode film and a high density region of the plurality of high density regions of the second electrode film are arranged in the thickness direction, sandwiching the current collector.

### [Configuration 2]

The electrode according to Configuration 1, wherein
respective widths of the plurality of high density regions and respective widths of the plurality of low density regions in the length direction are less than thicknesses of the first electrode film and the second electrode film.

### [Configuration 3]

The electrode according to Configuration 1 or 2, wherein
the plurality of high density regions have densities 1.1 times or greater and 1.5 times or less than the plurality of low density regions.

### [Configuration 4]

The electrode according to any one of Configurations 1 to 3, wherein
at least one of the first electrode film and the second electrode film is configured of a free-standing film, and
the at least one of the first electrode film and the second electrode film includes active material powders and a fibrillated binder.

### [Configuration 5]

The electrode according to any one of Configurations 1 to 4, wherein
the current collector has a wavy shape meandering in the thickness direction relative to the length direction.

### [Configuration 6]

The electrode according to Configuration 5, wherein
the first primary surface and the second primary surface of the current collector each include a protrusion and a recess alternately aligned in the length direction, and a middle portion located between the protrusion and the recess,
the first primary surface and the second primary surface each include a first region and a second region alternately formed in the length direction, the first region being a portion between a pair of the middle portions adjacent to each other in the length direction with the protrusion located between the pair of middle portions, the second region being a portion between a pair of the middle portions adjacent to each other in the length direction with the recess located between the pair of middle portions,
a region of the first electrode film along the first region in the length direction is the high density region, and a region of the first electrode film along the second region in the length direction is the low density region, and
a region of the second electrode film in the length direction along the first region is the low density region, and a region of the second electrode film in the length direction along the second region is the high density region.

### [Configuration 7]

A wound electrode assembly including
the electrode according to any one of Configurations 1 to 6, wherein
the electrode is wound along the length direction.

### [Configuration 8]

A secondary battery, including:
the wound electrode assembly according to Configuration 7; and
a housing case accommodating the wound electrode assembly.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. An electrode (10, 10A), comprising:
a current collector (11, 11A) having a first primary surface (11a) located on side end of a thickness direction of the electrode (10, 10A) and a second primary surface (11b) located on the other side of the thickness direction, the current collector (11, 11A) being elongated and extending along a length direction of the electrode (10, 10A) orthogonal to the thickness direction;
a first electrode film (13, 13A) disposed on the first primary surface (11a); and
a second electrode film (14, 14A) disposed on the second primary surface (11b), wherein
the first electrode film (13, 13A) and the second electrode film (14, 14A) each include a plurality of high density regions (R1) and a plurality of low density regions (R2),
the plurality of high density regions (R1) and the plurality of low density regions (R2) are disposed alternately along the length direction,
a high density region (R1) of the plurality of high density regions (R1) of the first electrode film (13, 13A) and a low density region (R2) of the plurality of low density regions (R2) of the second electrode film (14, 14A) are arranged in the thickness direction, sandwiching the current collector (11, 11A), and
a low density region (R2) of the plurality of low density regions (R2) of the first electrode film (13, 13A) and a high density region (R1) of the plurality of high density regions (R1) of the second electrode film (14, 14A) are arranged in the thickness direction, sandwiching the current collector (11, 11A).

2. The electrode (10, 10A) according to claim 1, wherein
respective widths of the plurality of high density regions (R1) and respective widths of the plurality of low density regions (R2) in the length direction are less than thicknesses of the first electrode film (13, 13A) and the second electrode film (14, 14A).

3. The electrode (10, 10A) according to claim 1 or 2, wherein
the plurality of high density regions (R1) have densities 1.1 times or greater and 1.5 times or less than the plurality of low density regions (R2).

4. The electrode (10, 10A) according to any one of claims 1 to 3, wherein
at least one of the first electrode film (13, 13A) and the second electrode film (14, 14A) is configured of a free-standing film, and
the at least one of the first electrode film (13, 13A) and the second electrode film (14, 14A) includes active material powders and a fibrillated binder.

5. The electrode (10A) according to any one of claims 1 to 4, wherein
the current collector (11A) has a wavy shape meandering in the thickness direction relative to the length direction.

6. The electrode (10A) according to claim 5, wherein
the first primary surface (11a) and the second primary surface (11b) of the current collector each include a protrusion (P11, P21) and a recess (P12, P22) alternately aligned in the length direction, and a middle portion (P13, P23) located between the protrusion (P11, P21) and the recess (P12, P22),
the first primary surface (11a) and the second primary surface (11b) each include a first region and a second region alternately formed in the length direction, the first region being a portion between a pair of the middle portions (P13, P23) adjacent to each other in the length direction with the protrusion (P11, P21) located between the pair of middle portions (P13, P23), the second region being a portion between a pair of the middle portions (P13, P23) adjacent to each other in the length direction with the recess (P12, P22) located between the pair of middle portions (P13, P23),
a region of the first electrode film (13A) along the first region in the length direction is the high density region (R1), and a region of the first electrode film (13A) along the second region in the length direction is the low density region, and
a region of the second electrode film (14A) in the length direction along the first region is the low density region, and a region of the second electrode film (14A) in the length direction along the second region is the high density region (R1).

7. A wound electrode assembly (1) comprising
the electrode (10, 10A) according to any one of claims 1 to 6, wherein
the electrode (10, 10A) is wound along the length direction.

8. A secondary battery (100), comprising:
the wound electrode assembly (1) according to claim 7; and
a housing case (2) accommodating the wound electrode assembly (1).
